(19) Europäisches Patentamt
European Patent Office
Office européen des brevets

(11) **EP 3 758 987 B1**

(12) **EUROPÄISCHE PATENTSCHRIFT**

(45) Veröffentlichungstag und Bekanntmachung des Hinweises auf die Patenterteilung:
**18.09.2024   Patentblatt 2024/38**

(21) Anmeldenummer: **19708424.7**

(22) Anmeldetag: **25.02.2019**

(51) Internationale Patentklassifikation (IPC):
**B60T 8/1755** (2006.01)   **B60G 17/0195** (2006.01)
**B60W 30/02** (2012.01)

(52) Gemeinsame Patentklassifikation (CPC):
**B60T 8/1755; B60G 17/0162; B60G 17/0195;
B60G 17/08; B60T 8/17555; B60W 30/025;**
B60G 2400/0523; B60G 2400/204; B60G 2400/41;
B60G 2500/10; B60G 2800/012; B60G 2800/24;
B60T 2260/06

(86) Internationale Anmeldenummer:
**PCT/EP2019/054507**

(87) Internationale Veröffentlichungsnummer:
**WO 2019/166349 (06.09.2019 Gazette 2019/36)**

(54) **VERFAHREN UND VORRICHTUNG ZUR REGELUNG DER FAHRZEUGQUERDYNAMIK**

METHOD AND DEVICE FOR CONTROLLING VEHICLE LATERAL DYNAMICS

PROCÉDÉ ET DISPOSITIF DE RÉGULATION DE LA DYNAMIQUE TRANSVERSALE D'UN VÉHICULE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **02.03.2018   DE 102018203182**

(43) Veröffentlichungstag der Anmeldung:
**06.01.2021   Patentblatt 2021/01**

(73) Patentinhaber: **VOLKSWAGEN
AKTIENGESELLSCHAFT
38440 Wolfsburg (DE)**

(72) Erfinder: **LAUMANNS, Nando
38442 Wolfsburg (DE)**

(56) Entgegenhaltungen:
**EP-A2- 1 197 409          WO-A1-2005/087521
DE-A1- 102014 214 272     US-A1- 2002 128 760
US-A1- 2005 228 565       US-A1- 2008 084 110
US-A1- 2009 132 121       US-B2- 8 880 293**

**Beschreibung**

Die Erfindung betrifft ein Verfahren zur Regelung der Fahrzeugquerdynamik gemäß dem Oberbegriff des Anspruchs 1 sowie eine entsprechende Vorrichtung gemäß dem Oberbegriff des Anspruchs 5.

In Fahrzeugen existieren in der Regel eine Vielzahl von Fahrdynamikregelsystemen, die jeweils unabhängig voneinander das Fahrverhalten des Fahrzeugs beeinflussen können. Diese Unabhängigkeit der Beeinflussung erzeugt jedoch einen hohen Aufwand bei der Abstimmung und Erprobung der in einem Fahrzeug vorhandenen Vielzahl an Fahrdynamikregelsystemen.

Adaptive Fahrwerksregelungen, auch als Dynamic Chassis Control (DCC) bezeichnet, sind in immer mehr modernen Fahrzeugen zu finden. Der entscheidende Unterschied zu konventionellen Fahrwerken sind elektronisch geregelte Dämpfer, mit denen sich das Dämpfungsverhalten regeln lässt.

Im Unterschied zu einem konventionellen Fahrwerk erfordert die Auslegung der FederDämpfer-Abstimmung bei einer adaptiven Fahrwerkregelung weniger Kompromisse. Denn bei ungeregelten Dämpfern muss entschieden werden, ob das Fahrwerk eher komfortabel oder sportlich auslegt wird. Bei einer adaptiven Regelung ist das anders. Unter normalen Bedingungen wird die Arbeit der Federn nur wenig gedämpft, während bei Bedarf automatisch eine verhärtete Dämpfung für mehr Fahrstabilität sorgt. Ein adaptives Fahrwerk reagiert permanent auf die Fahrbahn sowie die Fahrsituation und passt die Kennung der vier regelbaren Dämpfer an. Dabei orientiert sich das System "bei Normalfahrt" an den Signalen der Aufbau- und Radwegsensoren. Darauf aufbauend wird die Dämpfung radindividuell bis zu tausendmal pro Sekunde eingestellt. Bei Beschleunigungs-, Brems- oder Lenkvorgängen wird die Dämpfung zudem gezielt verhärtet, um Nick- und Wankbewegungen zu reduzieren. Hierzu wertet die Dämpferregelung die Signale der elektromechanischen Servolenkung, des Motors, des Getriebes, des Bremssystems sowie der Fahrerassistenzsysteme aus. Ein adaptives Fahrwerk bringt also einerseits mehr Komfort, doch es erhöht vor allem auch die Fahrsicherheit. Denn je weniger Unruhe in den Aufbau kommt, desto weniger und später muss das ESP, also das elektronische Stabilisierungsprogramm, eingreifen.

Eine derartige adaptive Fahrwerkregelung wird in der Druckschrift DE 10 2014 214 272 A1 beschrieben, die eine Vorrichtung und ein Verfahren zur Bestimmung eines resultierenden Giermoments zur Fahrdynamikregelung betrifft. Dabei wird mindestens eine fahrdynamische Sollgröße bestimmt, wobei in Abhängigkeit der mindestens einen fahrdynamischen Sollgröße mindestens ein Referenz-Giermoment, mindestens ein verfügbares Zusatzgiermoment und/oder mindestens ein vorhandenes Zusatzgiermoment bestimmt werden. In Abhängigkeit des Referenz-Giermoments und des mindestens einen verfügbaren und/oder vorhandenen Zusatzgiermoments wird ein resultierendes Giermoment bestimmt. Ferner offenbart die Druckschrift ein Verfahren zur Fahrdynamikregelung und ein entsprechendes Fahrzeug.

Die Druckschrift DE 10 2007 051 226 A1 beschreibt ein Dämpfersystem für ein Kraftfahrzeug. Ziel des Dämpfersystems ist es, den Zielkonflikt zwischen Fahrkomfort mit einer komfortablen, weichen Auslegung, und Fahrdynamik mit sportlicher, straffer Abstimmung dadurch zu entschärfen, dass verstellbare Dämpfer den Zustand der Auslegung über ein Regelungssystem regeln. Im Gegensatz zu auf den Markt käuflich erwerbbaren geregelten Systemen wird der Zielkonflikt zwischen Fahrkomfort und Fahrsicherheit/Fahrdynamik durch eine spezielle Einbindung von Zustandsgrößen weitgehend aufgelöst.

Die Druckschrift US 8,880,293 B2 betrifft eine Vorrichtung zur Regelung der Fahrzeugbewegung einschließlich einer Einrichtung zur Regelung der Bremskraft, die eine Bremskraft während eines Lenkvorgangs erzeugt. Weiter umfasst die Regelungsvorrichtung eine Vielzahl von krafterzeugenden Einrichtungen, die zwischen der Karosserie und den Fahrzeugachsen angeordnet sind, um regelbare Kraft zwischen der Karosserie und jedem Rad des Fahrzeugs zu erzeugen, eine Einheit zur Regelung der Kraft jeder Krafterzeugungseinrichtung und eine Einheit zur Berechnung eines Ziel-Nickzustandes aus dem Zustand in den sich das Fahrzeug dreht. Die Einheit zur Kraftregelung regelt die Kraft jeder Krafterzeugungseinrichtung derart, dass der Nickzustand des Fahrzeugs sich dem berechneten Ziel-Nickzustand nähert.

Die Druckschrift WO 2005/087521 A1 betrifft ein Verfahren zum Regeln der Fahrdynamik eines Fahrzeugs, bei dem ein einer Fahrervorgabe entsprechender Sollwert einer Fahrzustandsgrösse mit einem erfassten Istwert der Fahrzustandsgrösse verglichen wird and bei dem eine Wankmomentverteilung erfasst and verändert wird. Das Verfahren wird so durchgeführt, dass

- anhand des Vergleichs des Sollwertes der Fahrzustandsgrösse mit dem Istwert der Fahrzustandsgrösse ein Fahrverhalten des Fahrzeugs bestimmt wird,
- in Abhängigkeit des bestimmten Fahrverhaltens eine neue Wankmomentverteilung bestimmt wird, die einem vorgegebenen Fahrverhalten entspricht, und
- die neue Wankmomentverteilung eingestellt wird.

Die Druckschrift US 2009/0132121 A1 beschreibt eine Vorrichtung zur Schätzung der Geschwindigkeit der gefederten Massen für jedes Rad des Fahrzeugs zur Verwendung in einem vierrädrigen Fahrzeug. Die Vorrichtung umfasst eine Einheit zur Erfassung einer Zustandsgröße des Fahrzeugs, eine Einheit für die Berechnung eines Basiswerts der Geschwindigkeit der gefederten Masse für jedes der vier Räder basierend auf eines Erkennungsergebnisses der eine Einheit zur Erfassung einer Zustandsgröße unter Verwendung eines vorbestimmten Schwingungsmodells und eine Einheit zur Berechnung der Geschwindigkeit der gefederten Masse für jedes Rad, wobei die Basiswerte für die Geschwindigkeit der gefederten Massen für die vier Räder wechselseitig angepasst werden.

Die Druckschrift US 2008/0084110 A1 offenbart ein System zur Steuerung des Giermoments eines Fahrzeugs umfassend ein Hauptbetriebsmittel, das von einem Fahrer betrieben wird, um einen kinetischen Zustand des Fahrzeugs zu steuern; ein Hilfsbetriebsmittel, das mit dem Hauptbetriebsmittel verbunden und vom Fahrer betrieben wird, und einer Vorrichtung zur Erzeugung eines Giermoments, die ein Giermoment des Fahrzeugs als Reaktion auf den Betrieb des Hilfsbetriebsmittels ändert.

Die Druckschrift EP 1 197 409 A2 betrifft ein Fahrdynamik-Regelsystem eines insbesondere vierrädrigen Kraftfahrzeuges, wobei das zwischen Rädern und Fahrbahn zur Verfügung stehende Kraftschlußpotential durch ein Rechenverfahren ermittelt wird und unter Berücksichtigung hiervon ein Längskräfte auf die Fahrzeugräder aufbringendes Regelsystem geeignet betrieben wird. Dabei wird zusätzlich ein querdynamisches Regelsystem, welches Seitenkräfte in die Räder einleitet und ein vertikaldynamisches Regelsystem, welches die in Vertikalrichtung orientierte Radlast ändert, im Hinblick auf das Kraftschlußpotential geeignet betrieben. Bevorzugt geht dabei in die Berechnung des Kraftschlußpotentials neben den in der Horizontalebene zwischen den Rädern und der Fahrbahn übertragenen Kräften zusätzlich die in Vertikalrichtung orientierte Radlast mit ein. Ferner setzt ein sog. Kraftschlußregler, der die beteiligten Regelsysteme geeignet ansteuert, Prioritäten hinsichtlich unterschiedlicher Kriterien, wie Fahrsicherheit, Fahrverhalten und Fahrkomfort.

Die Druckschrift US 2005/0228565 A1 beschreibt eine Vorrichtung zur Stabilisierung eines Fahrzeugs in kritischen Fahrsituationen, einschließlich eines Fahrzeugdynamik-Steuerungssystems mit einer Steuereinheit, einschließlich eines Fahrzeugdynamik-Steueralgorithmus, und mindestens einem Aktor und einem zusätzlichen Fahrzeugstabilitätssystem mit einem zugehörigen Aktuator. Die Fahrzeugdynamiksteuerung kann besonders einfach und störungsfrei ausgeführt werden, wenn der Steuerungsalgorithmus der Fahrzeugdynamik mit einer Verteilungsfunktion nachgerüstet wird, die einen Betätigungswunsch nach einem Aktor der Fahrzeugdynamiksteuerung sowie eine Betätigungsanforderung für mindestens einen Aktor des Fahrzeugstabilitätssystems aus einer Reglerausgangsvariablen ableitet.

Die Druckschrift6 US 2002/0128760 A1 bezieht sich auf Fahrzeugaufhängungen und deren Steuerung und betrifft insbesondere ein Verfahren zur Steuerung einer Fahrzeugaufhängung durch Verwendung steuerbarer Dämpfer zur Verteilung der Dämpfungskräfte zwischen Vorder- und Hinterachse.

Der Erfindung liegt die Aufgabe zugrunde, die Ermittlung eines notwendigen Giermoments zur Erzeugung einer gewünschten Fahrzeugquerdynamik zu verbessern.

Diese Aufgabe wird gelöst durch ein Verfahren mit den Merkmalen des Anspruchs 1 sowie durch eine entsprechende Vorrichtung mit den Merkmalen des Anspruchs 5. Bevorzugte Ausführungsformen der Erfindung sind Gegenstand der Unteransprüche.

Bei dem erfindungsgemäßen Verfahren zur Erzeugung eines Giermoments zur Regelung der Fahrdynamik eines Fahrzeugs, wobei aus einer durch einen vorgegebenen Lenkwinkel vorgegebenen Sollgierrate ein Sollgiermoment des Fahrzeugs bestimmt wird damit das Fahrzeug den vorgegebenen Lenkwinkel bei der aktuellen Fahrzeuggeschwindigkeit durchlaufen kann, wobei das Soll-Giermoment in ein durch die Lenkung erzeugtes Lenk-Giermoment, ein Wank-Giermoment und ein Antriebs-Giermoment AGM aufgeteilt wird,

- wird das Wank-Giermoment auf individuelle Wank-Giermomente der einzelnen Räder aufgeteilt, die variabel einstellbar sind,
- fließen in die Ermittlung der Aufteilung des Soll-Giermoments das bereits vorhandene Antriebs-Giermoment sowie ein maximal mögliches Wank-Giermoment ein,
- werden die individuellen Wank-Giermomente der einzelnen Räder durch eine Ansteuerung der Dämpfer der Räder bewirkt,
- werden die individuellen Wank-Giermomente der einzelnen Räder durch eine individuelle Bestromung der Dämpfer bewirkt,
- wird durch eine Modellierung des Wank-Verhaltens des Fahrzeugs und eine Bestimmung des Wankwinkels und dessen Ableitungen die Dämpfkraft der Dämpfer ermittelt, wodurch durch eine Ansteuerung der Dämpfer die Dämpfkraft variabel auf die Räder verteilt wird, wobei

    - das Wank-Verhalten des Fahrzeugs durch ein lineares Modell beschrieben wird, bei dem
    - die Vorder- und Hinterachse des Fahrzeugs zusammengefasst werden,
    - die in Längsrichtung des Fahrzeugs verlaufende Wankachse in einem Wankpol zusammengefasst wird, und
    - die Querbeschleunigung im Aufbauschwerpunkt angreift.

Da in die Ermittlung der Aufteilung des Soll-Giermoments das bereits vorhandene Antriebs-Giermoment sowie ein maximal mögliches Wank-Giermoment einfließt, wird auf diese Weise wird die Verteilung des Soll-Giermoments begrenzt.

Ferner wird die individuellen Wank-Giermomente der einzelnen Räder durch eine Ansteuerung der Dämpfer der Räder bewirkt, wobei die Wank-Giermomente der einzelnen Räder durch eine individuelle Bestromung der Dämpfer bewirkt wird.

Durch die Modellierung des Wank-Verhaltens des Fahrzeugs und eine Bestimmung des Wankwinkels und dessen Ableitungen wird die Dämpfkraft der Dämpfer ermittelt, wodurch durch eine Ansteuerung der Dämpfer die Dämpfkraft variabel auf die Räder verteilt wird.

Weiter bevorzugt wird aus dem Sollgiermoment unter Berücksichtigung des maximal möglichen Wank-Giermoments ein Wank-Giermoment bestimmt, welches an den Rädern eingestellt wird.

Weiter bevorzugt wird das einzustellende Wank-Giermoment als Summe der an jedem Rad des Fahrzeugs einstellbaren individuellen Wank-Giermomente dargestellt. Durch die individuelle Einstellung kann die mögliche Querkraft optimiert werden, so dass das Fahrzeug ein besseres Kurvenverhalten zeigt.

Weiter bevorzugt wird abgeschätzt, mit welcher Geschwindigkeit sich die Dämpfer der Räder bewegen, so dass aus der Dämpfergeschwindigkeit die Dämpferbestromung ermittelt werden kann.

Die erfindungsgemäße Vorrichtung zur Erzeugung eines Giermoments zur Regelung der Fahrdynamik eines Fahrzeugs, wobei die Vorrichtung zur Durchführung des im Vorangegangenen erläuterten Verfahrens eingerichtet und ausgelegt ist, und wobei das Fahrzeug ein mit elektrisch ansteuerbaren Dämpfern ausgestattetes Fahrwerk aufweist, umfasst

- eine Einrichtung zur Bestimmung eines Soll-Schwimmwinkels und einer Soll-Gierrate aus einem Lenkwinkel,
- eine Einrichtung zur Ermittlung eines Soll-Giermoments, aus dem Soll-Schwimmwinkel und der Soll-Gierrate,
- eine Einrichtung zur Aufteilung des Soll-Giermoments auf ein Lenk-Giermoment einer Lenkeinrichtung, ein Wank-Giermoment einer Wankregelung und ein Antriebs-Giermoment einer Antriebsregelung, wobei die Wankregelung dazu eingerichtet ist, das Wank-Giermoment auf individuelle Wank-Giermomente der einzelnen Räder aufzuteilen, wobei die unterschiedlichen Wank-Giermomente der einzelnen Räder durch eine unterschiedliche Dämpferbestromung der einzelnen Dämpfer der jeweiligen Räder bewirkt werden.

Durch die Vorrichtung wird die auf die Fahrbahn absetzbare Querkraft des Fahrzeugs optimiert bzw. erhöht, was zu einem sicheren Fahrverhalten führt.

Eine bevorzugte Ausführungsform der Erfindung wird nachfolgend anhand der Zeichnungen erläutert. Dabei zeigt

Fig. 1    eine Giermomentregelung eines Kraftfahrzeugs in schematischer Darstellung,

Fig. 2    den Zusammenhang zwischen Radaufstandskraft, Schräglaufwinkel und Querkraft,

Fig. 3    ein typisches Kennfeld für einen geregelten Dämpfer, und

Fig. 4    ein lineares Modellsystem zu Ermittlung des Zusammenhangs zwischen Radaufstandskräften und Giermoment.

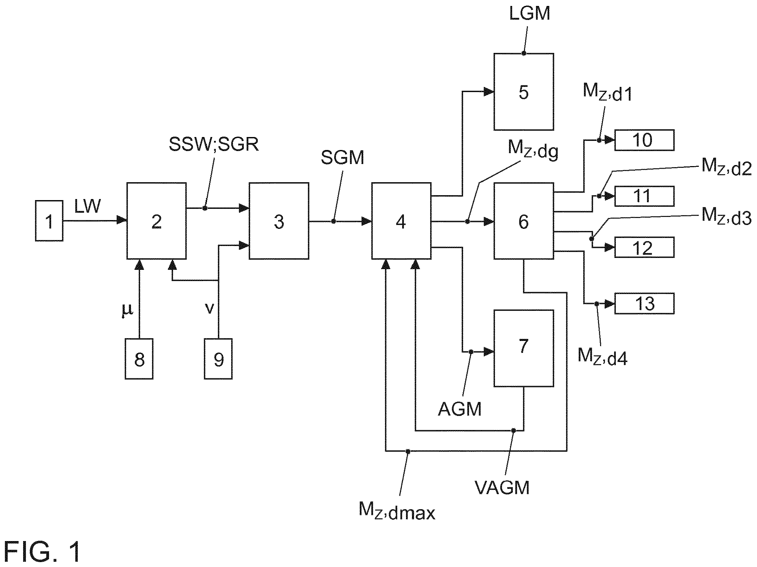

Fig. 1 zeigt eine Giermomentregelung eines Fahrzeugs, insbesondere eines Kraftfahrzeugs, in schematischer Darstellung. Mittels einer Eingabeeinrichtung 1, üblicherweise ein Lenkrad, wird fahrerseitig ein Lenkwinkel LW vorgegeben. Dieser Lenkwinkel LW bildet eine Eingangsgröße für eine nachfolgende Einrichtung 2 zur Bestimmung einer Sollgierrate SGR und eines Sollschwimmwinkels SSW des Fahrzeugs, wobei die Bestimmung dieser Sollgrößen beispielsweise unter Verwendung eines nicht-invertierten Fahrzeugmodells, insbesondere eines nicht-invertierten Einspurmodells, des zu regelnden Fahrzeugs erfolgt.

Weitere Eingangsgrößen zur Bestimmung der Sollgierrate SGR und des Sollschwimmwinkels SSW sind die Geschwindigkeit v des Fahrzeugs und optional der Reibwert μ der Fahrzeugräder auf der Fahrbahn. Dabei werden die Geschwindigkeit v mittels eines Geschwindigkeitssensors 9 und der Reibwert μ mittels einer Stabilitätseinrichtung 8 des Fahrzeugs bestimmt.

Aus den so ermittelten Sollgrößen Sollgierrate SGR und Sollschwimmwinkel SSW wird in einer Einrichtung 3 unter Berücksichtigung der Fahrzeuggeschwindigkeit v das gewünschte Soll-Giermoment SGM des Fahrzeugs ermittelt. Dabei entspricht das Soll-Giermoment SGM dem Giermoment des Fahrzeugs, welches insgesamt notwendig ist, damit das Fahrzeug den gewünschten Lenkwinkel LW bei der aktuellen Fahrzeuggeschwindigkeit v durchlaufen kann.

Das Soll-Giermoment SGM wird einer Einrichtung 4 zugeführt, in der das Soll-Giermoment SGM in einzelne Komponenten aufgeteilt wird, die das Fahrzeug erzeugen kann, so dass in der Summe eine ausgewogene Fahrzeugdynamik erreicht wird. Das Soll-Giermoment SGM wird daher in der Aufteilungseinrichtung 4 in ein Lenk-Giermoment LGM, welches durch die Lenkung erzeugt wird, ein Wank-Giermoment $M_{z,dg}$, welches durch die geregelten Dämpfer erzeugt wird, und ein Antriebs-Giermoment AGM, welches durch den Antrieb erzeugt wird, aufgeteilt. Zur Ermittlung der Aufteilung des Soll-Giermoments SGM werden der Aufteilungseinrichtung 4 das bereits vorhandene Antriebs-Giermoment VAGM sowie ein maximal mögliches Wank-Giermoment $M_{z,dmax}$ zugeführt.

Das von der Aufteilungseinrichtung 4 ermittelte Lenk-Giermoment LGM wird der Lenkeinrichtung 5 des Fahrzeugs, das ermittelte Wank-Giermoment $M_{z,dg}$ der Wankregelung 6 des Fahrzeugs, und das ermittelte Antriebs-Giermoment AGM der Antriebsregelung 7 des Fahrzeugs zugeführt. Dabei ermittelt die Antriebsregelung 7 das bereits vorhandene Antriebsmoment VAGM und führt dieses in einer Rückkopplungsschleife der Aufteilungseinrichtung 4 als Eingangsgröße wieder zu.

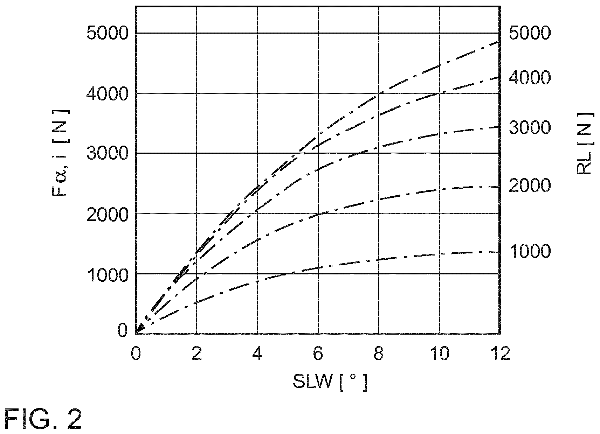

In der Wankregelung 6 wird das Wank-Giermoment $M_{z,dg}$ analysiert und weiter auf die vorhandenen geregelten Dämpfer aufgeteilt, wobei jeder der geregelten Dämpfer über eine separate Dämpferregelung 10, 11, 12 und 13 verfügt. Dabei wird im Beispiel der Fig. 1 von vier Dämpferregelungen für vier geregelte Dämpfer eines vierrädrigen Fahrzeugs ausgegangen. Sind weniger oder mehr geregelte Dämpfer am Fahrzeug vorhanden, so sind entsprechend weniger oder mehr Dämpferregelungen vorhanden. Im Beispiel der Fig. 1 wird das Wank-Giermoment daher in ein über den ersten Dämpfer einzustellendes Wank-Giermoment $M_{z,d1}$, ein am zweiten Dämpfer einzustellendes Wank-Giermoment $M_{z,d2}$, ein am dritten Dämpfer einzustellendes Wank-Giermoment $M_{z,d3}$ und ein am vierten Dämpfer einzustellendes Wank-Giermoment $M_{z,d4}$ aufgeteilt, wie dies später unter Bezug auf die Fig. 2 genauer erläutert werden wird.

Fig. 2 zeigt den Zusammenhang zwischen der auf der links nach oben aufgetragenen Reifenquerkraft $F_{\alpha,i}$, dem horizontal nach rechts aufgetragenen Schräglaufwinkel und der in Form von fünf Graphen dargestellten Radlast für 1000N, 2000N, 3000N, 4000N und 5000N. Dabei ist die Fig. 2 so zu lesen, dass für einen vorgegebenen Schräglaufwinkel SLW und eine vorgegebene Radlast RL sich an der linken vertikalen Achse die erzeugte Reifenquerkraft $F_{\alpha,i}$ ablesen lässt.

Erzeugen beispielsweise zwei Reifen auf einer Achse eine Radlast von 6000N, so ist der Fig. 2 zu entnehmen, dass die erzeiget Reifenquerkraft dann maximal ist, wenn beide Reifen eine Radlast von 3000N aufnehmen. Alle anderen Kombinationen erzeigen in der Summe eine geringere Reifenquerkraft und zwar unabhängig vom Schräglaufwinkel SLW. So können beispielsweise bei einer Kurvenfahrt der kurvenäußere Reifen eine Radlast von 5000N und der kurveninnere Reifen eine Radlast von 1000N erzeugen. Aus der Fig. 2 ist nun ablesbar, dass die Summe aus der Querkraft für eine Radlast von 5000N und der Querkraft für eine Radlast von 1000N für alle Schräglaufwinkel SLW kleiner ist als die Summe der Querkraft von 3000N des kurvenäußeren Reifen und der Querkraft von 3000N des kurveninneren Reifens.

Durch eine geeignete Ansteuerung der geregelten Dämpfer ist es daher möglich, die Radlastunterschiede der Achsen zu verteilen und dadurch die Gesamtquerkraft der Achsen zu erhöhen oder zu verringern, was durch eine entsprechende Dämpferbestromung erreicht werden kann.

Das über die Dämpferregelung 6 in Fig. 1 erzeugte gesamte Wank-Giermoment $M_{z,dg}$ kann wie folgt berechnet werden:

$$M_{z,dg} = \Delta M_{z,d1} + \Delta M_{z,d2} + \Delta M_{z,d3} + \Delta M_{z,d4} \qquad (1),$$

mit:

$$\Delta M_{z,d1} = -\left( -\frac{\partial F_{\alpha 1}}{\partial F_{z,d1}} \cdot \Delta F_{z,d1} \cdot \sin \delta_v + \frac{\partial F_{\lambda 1}}{\partial F_{z,d1}} \cdot \Delta F_{z,d1} \cdot \cos \delta_v \right) \cdot \frac{b}{2}$$
$$+ \left( \frac{\partial F_{\alpha 1}}{\partial F_{z,d1}} \cdot \Delta F_{z,d1} \cdot \cos \delta_v + \frac{\partial F_{\lambda 1}}{\partial F_{z,d1}} \cdot \sin \delta_v \right) \cdot l_v, . \qquad (2)$$

$$\Delta M_{z,d2} = -\left( -\frac{\partial F_{\alpha 2}}{\partial F_{z,d}} \cdot \Delta F_{z,d2} \cdot \sin \delta_v + \frac{\partial F_{\lambda 2}}{\partial F_{z,d2}} \cdot \Delta F_{z,d2} \cdot \cos \delta_v \right) \cdot \frac{b}{2}$$
$$+ \left( \frac{\partial F_{\alpha 2}}{\partial F_{z,d2}} \cdot \Delta F_{z,d2} \cdot \cos \delta_v + \frac{\partial F_{\lambda 2}}{\partial F_{z,d2}} \cdot \sin \delta_v \right) \cdot l_v , \qquad (3)$$

$$\Delta M_{z,d3} = -\left( -\frac{\partial F_{\alpha 3}}{\partial F_{z,d3}} \cdot \Delta F_{z,d3} \cdot \sin \delta_h + \frac{\partial F_{\lambda 3}}{\partial F_{z,d3}} \cdot \Delta F_{z,d3} \cdot \cos \delta_h \right) \cdot \frac{b}{2}$$

$$+ \left( \frac{\partial F_{\alpha 3}}{\partial F_{z,d3}} \cdot \Delta F_{z,d3} \cdot \cos \delta_h + \frac{\partial F_{\lambda 3}}{\partial F_{z,d3}} \cdot \sin \delta_h \right) \cdot l_h \qquad (4),$$

und

$$\Delta M_{z,d4} = -\left( -\frac{\partial F_{\alpha 4}}{\partial F_{z,d4}} \cdot \Delta F_{z,d4} \cdot \sin \delta_h + \frac{\partial F_{\lambda 4}}{\partial F_{z,d4}} \cdot \Delta F_{z,d4} \cdot \cos \delta_h \right) \cdot \frac{b}{2}$$

$$+ \left( \frac{\partial F_{\alpha 4}}{\partial F_{z,d4}} \cdot \Delta F_{z,d4} \cdot \cos \delta_h + \frac{\partial F_{\lambda 4}}{\partial F_{z,d4}} \cdot \sin \delta_h \right) \cdot l_h \; . \qquad (5)$$

mit den folgenden Notationen:

$M_{z,dg}$ - Gesamtwank-Giermoment mittels der Dämpferregelung
$M_{z,d1}$ - Giermoment am Rad vorne links
$M_{z,d2}$ - Giermoment am Rad vorne rechts
$M_{z,d3}$ - Giermoment am Rad hinten links
$M_{z,d4}$ - Giermoment am Rad hinten rechts
$F_{z,di}$ - Vertikalkraft (in z-Richtung) am Rad i
$F_{\alpha i}$ - Querkraft am Rad i
$F_{\lambda i}$ - Längskraft am Rad i
$\delta_v$ - Lenkwinkel Vorderachse
$\delta_h$ - Lenkwinkel Hinterachse
$b$ - Spurweite
$l_v$ - Abstand des Schwerpunktes zur Vorderachse
$l_h$ - Abstand des Schwerpunktes zur Hinterachse

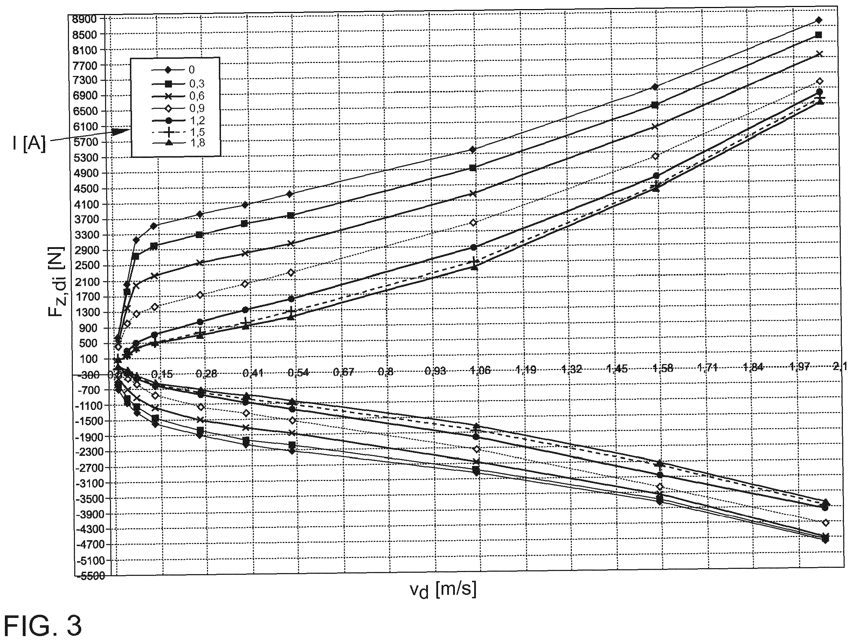

Mit den Gleichungen (1) bis (5) kann berechnet werden, welche Kraftunterschiede an den einzelnen Rädern durch die regelbaren Dämpfer eingestellt werden müssen, um das aufzubringende Wank-Giermoment $M_{z,dg}$ zu erzeugen. Durch eine Modellierung der Fahrzeugbewegung kann näherungsweise geschätzt werden, mit welcher Geschwindigkeit sich die Dämpfer bewegen. Bei einem gegebenen Zusammenhang aus Dämpfergeschwindigkeit, Dämpferkraft und Dämpferstrom, wie dies in der nachfolgenden Fig. 3 beispielhaft erläutert wird, können die zur Einstellung des Giermoment notwendigen Dämpferströme ermittelt werden.

Fig. 3 zeigt ein typisches Beispiel für einen geregelten Dämpfer. Dargestellt ist die Dämpfungskraft $F_{z,di}$ in vertikaler Richtung z eines Dämpfers i in Newton als Funktion der Dämpfergeschwindigkeit $v_d$ in m/s für verschiedene Dämpferbestromungen mit I = 0 bis 1,8 A in Schritten von 0,3 A. Es ist aus der Darstellung der Fig. 3 erkennbar, dass die Dämpfungskraft $F_{z,di}$ des geregelten Dämpfers i von der eingestellten Bestromung I beeinflusst wird und auf diese Weise über die Dämpferbestromung die Vertikalkraft $F_{z,di}$ am Rad eingestellt werden kann, wodurch das Giermoment des entsprechenden Rades beeinflusst und eingestellt werden kann.

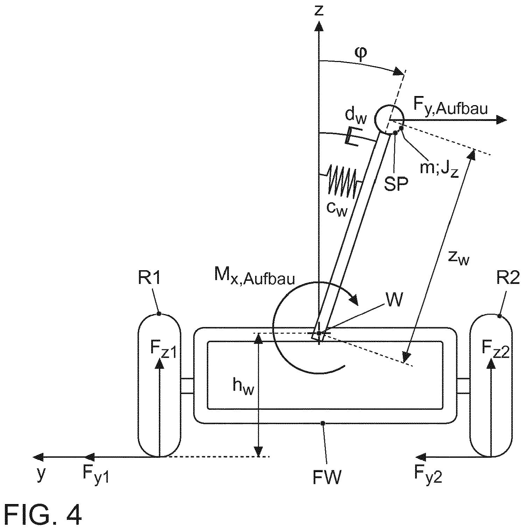

Fig. 4 zeigt in schematischer Darstellung den Zusammenhang zwischen den Raddämpfkräften und dem Giermoment anhand eines linearen Systems, in dem anschaulich und näherungsweise das Wankverhalten eines Fahrzeugs dargestellt ist.

Der in Fig. 4 nicht explizit dargestellte Aufbau eines Fahrzeugs ist nicht starr an das Fahrwerk gekoppelt. Durch Federn, Dämpfer und Stabilisatoren wird das Fahrzeug durch Anregungen, die bei der Fahrt von der Straße über die Reifen in das Fahrzeug eingeleitet werden, zum Schwingen angeregt. Soll nur die Bewegung des Fahrzeugs um dessen in Längsrichtung verlaufende x-Achse betrachtet werden, so kann das Wankverhalten des Fahrzeugs durch ein einfaches lineares Modell beschrieben werden. Dabei werden für dieses Modell die Vorder- und Hinterachse zusammengefasst und die in x-Richtung verlaufende Wankachse in einem Wankpol zusammengefasst. Ferner wird angenommen, dass die Querbeschleunigung im Aufbauschwerpunkt angreift. Alle Kräfte, die in den Federn, Dämpfern und Stabilisatoren entstehen, werden durch diese Querbeschleunigung hervorgerufen. Für die Modellierung der Wankdynamik wird ein Wankträgheitsmoment $J_z$, eine Wankdämpfung $d_w$ und eine Wanksteifigkeit $c_w$ eingeführt.

Dargestellt in Fig. 4 ist das Modell mit einem einachsigen Fahrwerk FW, welches die Vorder- und Hinterachse zusammenfasst, das linke und rechte Rad R1, R2 des einachsigen Fahrwerks FW und dem Wankpol W, der in einer Höhe hw über der Fahrbahn angeordnet ist. Auf die Räder R1, R2 wirken Kräfte in y-Richtung $F_{y1}$, $F_{y2}$ und Kräfte in z-Richtung $F_{z1}$, $F_{z2}$. Im Aufbauschwerpunkt SP greift die Fliehkraft $F_{y, Aufbau}$ an, was zu einer Auslenkung des Fahrzeugaufbaus um einen Wankwinkel φ gegenüber der z-Achse führt.

Der Abstand zwischen dem Wankpol W und dem Aufbauschwerpunkt SP beträgt zw, was als Wankhebelarm bezeichnet wird. Unter der Voraussetzung, dass der Cosinus des Wankwinkels ungefähr 1 ist, also cos(cp) ≈ 1, erzeugt die Fliehkraft $F_{y,Aufbau}$ das folgenden Wankmoment $M_{x,Aufbau}$:

$$M_{x,Aufbau} = F_{y,Aufbau} \cdot z_{W.}$$

Dieses Wankmoment $M_{x,Aufbau}$ setzt sich in diesem Modell aus dem im Aufbauschwerpunkt lokalisierten Wankträgheitsmoment $J_z$, der Wankdämpfung $d_w$ und der Wanksteifigkeit $c_w$ als Funktion des Wankwinkel $\varphi$ wie folgt zusammen:

$$M_{x,Aufbau} = J_z \cdot \ddot{\varphi} + d_W \cdot \dot{\varphi} + c_W \cdot \varphi,$$

wobei der Gewichtskraftanteil $M_{x,G}$ des Wankmoment $M_{x,Aufbau}$, nämlich:

$$M_{x,G} = m \cdot g \cdot z_W \cdot sin(\varphi)$$

angenähert in der Wanksteifigkeit $c_W$ enthalten ist.

Der Wankwinkel φ kann durch unterschiedliche Sensoren gemessen werden. Weiter kann die Dämpfkraft $Fd = (d_W \cdot \dot{\varphi})/z_W$ durch eine Ansteuerung der Dämpferventile variabel auf die einzelnen Räder verteilt werden. Dadurch verändert sich die Radlast entsprechend. Durch eine Erhöhung der Radlast steigt die maximal übertragbare Querkraft zwar an, dieser Verlauf ist jedoch degressiv, wie dies in Fig. 2 dargestellt ist. Eine Erhöhung der Dämpfkraft an beiden Räder einer Achse hat somit zur Folge, dass die maximale Querkraft am einfedernden Rad ansteigt und die am ausfedernden Rad aber stärker abfällt. Dadurch wird die Gesamtquerkraft geringer. Mit dem Abstand der Achse zum Schwerpunkt ergibt sich das resultierende Giermoment.

**Bezugszeichenliste**

1    Lenkwinkeleingabe
2    Einrichtung zur Bestimmung des Soll-Schwimmwinkels und der Soll-Gierrate
3    Einrichtung zur Bestimmung des Soll-Giermoments
4    Einrichtung zur Aufteilung des Soll-Giermoments
5    Lenkeinrichtung
6    Wankregelung
7    Antriebsregelung
8    Stabilitätseinrichtung
9    Geschwindigkeitssensor
10    Regelung Dämpfer 1
11    Regelung Dämpfer 2
12    Regelung Dämpfer 3
13    Regelung Dämpfer 4

LW        Lenkwinkel
μ        Reibwert
v        Geschwindigkeit
SSW        Soll-Schwimmwinkel
SGR        Soll-Gierrate
SGM        Soll-Giermoment
LGM        Lenk-Giermoment
AGM        Antriebs-Giermoment
VAGM        vorhandenes Antriebs-Giermoment

| | | |
|---|---|---|
| $M_{z,dmax}$ | maximales Wank-Giermoment | |
| $M_{z,dg}$ | Wank-Giermoment für alle Dämpfer | |
| $M_{z,d1}$ | einzustellendes Wank-Giermoment am ersten Dämpfer | |
| $M_{z,d2}$ | einzustellendes Wank-Giermoment am zweiten Dämpfer | |
| $M_{z,d3}$ | einzustellendes Wank-Giermoment am dritten Dämpfer | |
| $M_{z,d4}$ | einzustellendes Wank-Giermoment am vierten Dämpfer | |
| $F_{\alpha,i}$ | Reifenquerkraft | |
| SLW | Schräglaufwinkel | |
| RL | Radlast | |
| $F_{z,di}$ | Dämpfungskraft | |
| $v_d$ | Dämpfergeschwindigkeit | |
| I | Dämpferstrom | |
| y | y-Achse | |
| z | z-Achse | |
| $\varphi$ | Wankwinkel | |
| $F_{y,Aufbau}$ | Fliehkraft | |
| W | Wankpol | |
| $d_W$ | Wankdämpfung | |
| $c_W$ | Wanksteifigkeit | |
| $J_z$ | Wankträgheitsmoment | |
| SP | Aufbauschwerpunkt | |
| m | Masse des Aufbaus im Aufbauschwerpunkt | |
| $z_W$ | Wankhebelarm | |
| $h_W$ | Höhe des Wankpols über der Fahrbahn | |
| FW | Fahrwerk | |
| R1 | Rad 1 | |
| R2 | Rad 2 | |
| $F_{z1}$ | Kraft Rad 1 in z-Richtung | |
| $F_{z2}$ | Kraft Rad 2 in z-Richtung | |
| $F_{y1}$ | Kraft Rad 1 in y-Richtung | |
| $F_{y2}$ | Kraft Rad 2 in y-Richtung | |
| $M_{x,Aufbau}$ | Wankmoment des Fahrzeugaufbaus um den Wankpol W | |

**Patentansprüche**

1. Verfahren zur Erzeugung eines Giermoments zur Regelung der Fahrdynamik eines Fahrzeugs, wobei aus einer durch einen vorgegebenen Lenkwinkel (LW) vorgegebenen Sollgierrate (SGR) ein Sollgiermoment (SGM) des Fahrzeugs bestimmt wird, damit das Fahrzeug den vorgegebenen Lenkwinkel (LW) bei der aktuellen Fahrzeuggeschwindigkeit (v) durchlaufen kann, wobei das Soll-Giermoment (SGM) in ein durch die Lenkung erzeugtes Lenk-Giermoment LGM, ein Wank-Giermoment ($M_{z,dg}$) und ein Antriebs-Giermoment AGM aufgeteilt wird, **dadurch gekennzeichnet, dass**

das Wank-Giermoment ($M_{z,dg}$) auf individuelle Wank-Giermomente ($M_{z,d1}$, $M_{z,d2}$, $M_{z,d3}$, $M_{z,d4}$) der einzelnen Räder aufgeteilt wird, die variabel einstellbar sind, wobei in die Ermittlung der Aufteilung des Soll-Giermoments (SGM) das bereits vorhandene Antriebs-Giermoment (VAGM) sowie ein maximal mögliches Wank-Giermoment ($M_{z,dmax}$) einfließen, die individuellen Wank-Giermomente ($M_{z,d1}$, $M_{z,d2}$, $M_{z,d3}$, $M_{z,d4}$) der einzelnen Räder durch eine Ansteuerung der Dämpfer der Räder bewirkt werden, die individuellen Wank-Giermomente ($M_{z,d1}$, $M_{z,d2}$, $M_{z,d3}$, $M_{z,d4}$) der einzelnen Räder durch eine individuelle Bestromung der Dämpfer bewirkt werden, und durch eine Modellierung des Wank-Verhaltens des Fahrzeugs und eine Bestimmung des Wankwinkels ($\varphi$) und dessen Ableitungen die Dämpfkraft der Dämpfer ermittelt wird, wodurch durch eine Ansteuerung der Dämpfer die Dämpfkraft variabel auf die Räder verteilt wird, wobei das Wank-Verhalten des Fahrzeugs durch ein lineares Modell beschrieben wird, bei dem die Vorder- und Hinterachse des Fahrzeugs zusammengefasst werden, die in Längsrichtung des Fahrzeugs verlaufende Wankachse in einem Wankpol zusammengefasst wird, und die Querbeschleunigung im Aufbauschwerpunkt angreift.

**2.** Verfahren nach Anspruch 1, **dadurch gekennzeichnet, dass** aus dem Sollgiermoment (SGM) unter Berücksichtigung des maximal möglichen Wank-Giermoments ($M_{z,dmax}$) das Wank-Giermoment ($M_{z,dg}$) bestimmt wird, welches an den Rädern eingestellt wird.

**3.** Verfahren nach Anspruch 2, **dadurch gekennzeichnet, dass** das einzustellende Wank-Giermoment ($M_{z,dg}$) als Summe der an jedem Rad des Fahrzeugs einstellbaren individuellen Wank-Giermomente ($M_{z,d1}$, $M_{z,d2}$, $M_{z,d3}$, $M_{z,d4}$) dargestellt wird.

**4.** Verfahren nach einem der vorangegangenen Ansprüche, **dadurch gekennzeichnet, dass** abgeschätzt wird, mit welcher Geschwindigkeit sich die Dämpfer der Räder bewegen, und aus der Dämpfergeschwindigkeit die Dämpferbestromung ermittelt wird.

**5.** Vorrichtung zur Erzeugung eines Giermoments zur Regelung der Fahrdynamik eines Fahrzeugs, wobei die Vorrichtung zur Durchführung des Verfahrens nach einem der vorangegangenen Ansprüche eingerichtet und ausgelegt ist, und das Fahrzeug ein mit elektrisch ansteuerbaren Dämpfern ausgestattetes Fahrwerk aufweist, mit einer Einrichtung (2) zur Bestimmung eines Soll-Schwimmwinkels und einer Soll-Gierrate aus einem Lenkwinkel,

einer Einrichtung (3) zur Ermittlung eines Soll-Giermoments, aus dem Soll-Schwimmwinkel und der Soll-Gierrate,
einer Einrichtung (4) zur Aufteilung des Soll-Giermoments auf ein Lenk-Giermoment einer Lenkeinrichtung (5), ein Wank-Giermoment einer Wankregelung (6) und ein Antriebs-Giermoment einer Antriebsregelung (7),
**dadurch gekennzeichnet, dass**
die Wankregelung (6) dazu eingerichtet ist, das Wank-Giermoment auf individuelle Wank-Giermomente der einzelnen Räder aufzuteilen.

**6.** Vorrichtung nach Anspruch 5, **dadurch gekennzeichnet, dass** die individuellen Wank-Giermomente ($M_{z,d1}$, $M_{z,d2}$, $M_{z,d3}$, $M_{z,d4}$) der einzelnen Räder durch eine unterschiedliche Dämpferbestromung der einzelnen Dämpfer der jeweiligen Räder bewirkt werden.

**Claims**

**1.** Method for generating a yaw moment for controlling the driving dynamics of a vehicle, a target yaw moment (SGM) of the vehicle being determined from a target yaw rate (SGR) specified by a specified steering angle (LW), so that the vehicle can traverse the specified steering angle (LW) at the current vehicle speed (v), the target yaw moment (SGM) being divided into a steering yaw moment LGM generated by the steering, a roll yaw moment ($M_{z,dg}$) and a drive yaw moment AGM,
**characterized in that**

the roll yaw moment ($M_{z,dg}$) is divided into individual roll yaw moments ($M_{z,d1}$, $M_{z,d2}$, $M_{z,d3}$, $M_{z,d4}$) of the individual wheels, which can be variably set,
the already present drive yaw moment (VAGM) and a maximum possible roll yaw moment ($M_{z,dmax}$) being taken into account in ascertaining the distribution of the target yaw moment (SGM),
the individual roll yaw moments ($M_{z,d1}$, $M_{z,d2}$, $M_{z,d3}$, $M_{z,d4}$) of the individual wheels being caused by controlling the dampers of the wheels,
the individual roll yaw moments ($M_{z,d1}$, $M_{z,d2}$, $M_{z,d3}$, $M_{z,d4}$) of the individual wheels being caused by individual current supply to the dampers, and
the damping force of the dampers being ascertained by modeling the rolling behavior of the vehicle and determining the roll angle ($\varphi$) and its derivatives, as a result of which the damping force is distributed variably to the wheels by controlling the dampers,
the rolling behavior of the vehicle being described by a linear model in which the front and rear axles of the vehicle are combined, the roll axis extending in the longitudinal direction of the vehicle is combined in a roll pole, and the lateral acceleration acts at the structural center of gravity.

**2.** Method according to claim 1, **characterized in that** the roll yaw moment ($M_{z,dg}$), which is set at the wheels, is determined from the target yaw moment (SGM) taking into account the maximum possible roll yaw moment ($M_{z,dmax}$).

**3.** Method according to claim 2, **characterized in that** the roll yaw moment ($M_{z,dg}$) to be set is represented as the sum of the individual roll yaw moments ($M_{z,d1}$, $M_{z,d2}$, $M_{z,d3}$, $M_{z,d4}$) that can be set at each wheel of the vehicle.

4. Method according to any of the preceding claims, **characterized in that** the speed at which the dampers of the wheels move is estimated and the damper current supply is ascertained from the damper speed.

5. Apparatus for generating a yaw moment for controlling the driving dynamics of a vehicle, the apparatus being designed to carry out the method according to any of the preceding claims, and the vehicle having a chassis equipped with electrically controllable dampers, comprising a device (2) for determining a target slip angle and a target yaw rate from a steering angle,

    a device (3) for ascertaining a target yaw moment from the target slip angle and the target yaw rate,
    and a device (4) for dividing the target yaw moment into a steering yaw moment of a steering device (5), a roll yaw moment of a roll control means (6) and a drive yaw moment of a drive control means (7),
    **characterized in that**
    the roll control means (6) is designed to distribute the roll yaw moment to individual roll yaw moments of the individual wheels.

6. Apparatus according to claim 5, **characterized in that** the individual roll yaw moments ($M_{z,d1}$, $M_{z,d2}$, $M_{z,d3}$, $M_{z,d4}$) of the individual wheels are caused by a different damper current supply to the individual dampers of the respective wheels.

**Revendications**

1. Procédé pour la génération d'un couple de lacet pour la régulation de la dynamique de conduite d'un véhicule, un couple de lacet de consigne (SGM) du véhicule étant déterminé à partir d'un taux de lacet de consigne (SGR) prédéfini par un angle de direction (LW) prédéfini, pour que le véhicule puisse parcourir l'angle de braquage (LW) prédéfini à la vitesse actuelle du véhicule (v), le couple de lacet de consigne (SGM) étant divisé en un couple de lacet de direction LGM généré par la direction, un couple de lacet de roulis ($M_{z,dg}$) et un couple de lacet d'entraînement AGM,
**caractérisé en ce que**

    le couple de roulis ($M_{z,dg}$) est réparti sur des couples de roulis individuels ($M_{z,d1}$, $M_{z,d2}$, $M_{z,d3}$, $M_{z,d4}$) des différentes roues, qui sont réglables de manière variable, dans lequel
    le couple de lacet d'entraînement (VAGM) déjà existant ainsi qu'un couple de lacet de roulis maximal possible ($M_{z,dmax}$) sont pris en compte dans la détermination de la répartition du couple de lacet de consigne (SGM),
    les couples de lacet de roulis individuels ($M_{z,d1}$, $M_{z,d2}$, $M_{z,d3}$, $M_{z,d4}$) des différentes roues sont provoqués par une commande des amortisseurs des roues,
    les couples de lacet de roulis individuels ($M_{z,d1}$, $M_{z,d2}$, $M_{z,d3}$, $M_{z,d4}$) des différentes roues sont provoqués par une alimentation électrique individuelle des amortisseurs, et
    par une modélisation du comportement au roulis du véhicule et une détermination de l'angle de roulis ($\varphi$) et de ses dérivées, la force d'amortissement des amortisseurs est déterminée, ce qui permet de répartir de manière variable la force d'amortissement sur les roues par une commande des amortisseurs, dans lequel
    le comportement de roulis du véhicule est décrit par un modèle linéaire dans lequel les essieux avant et arrière du véhicule sont regroupés, l'axe de roulis s'étendant dans le sens longitudinal du véhicule est regroupé dans un pôle de roulis, et l'accélération transversale est appliquée au centre de gravité de la carrosserie.

2. Procédé selon la revendication 1, **caractérisé en ce que** le couple de lacet de roulis ($M_{z,dg}$) qui est réglé sur les roues est déterminé à partir du couple de lacet de consigne (SGM) en tenant compte du couple de lacet maximal possible ($M_{z,dmax}$).

3. Procédé selon la revendication 2, **caractérisé en ce que** le couple de lacet de roulis ($M_{z,dg}$) à régler est représenté par la somme des couples de lacet de roulis individuels ($M_{z,d1}$, $M_{z,d2}$, $M_{z,d3}$, $M_{z,d4}$) réglables sur chaque roue du véhicule.

4. Procédé selon l'une des revendications précédentes, **caractérisé en ce qu'**il est estimé à quelle vitesse se déplacent les amortisseurs des roues, et que le courant d'amortisseur est déterminé à partir de la vitesse d'amortisseur.

**5.** Dispositif pour la génération d'un couple de lacet pour la régulation de la dynamique de conduite d'un véhicule, le dispositif étant conçu et réalisé pour la mise en oeuvre du procédé selon l'une des revendications précédentes, et le véhicule présentant un châssis équipé d'amortisseurs à commande électrique, comportant un dispositif (2) pour la détermination d'un angle de flottement de consigne et d'un taux de lacet de consigne à partir d'un angle de direction,

un dispositif (3) pour la détermination d'un couple de lacet de consigne, à partir de l'angle de flottement de consigne et du taux de lacet de consigne,
un dispositif (4) pour la répartition du couple de lacet de consigne entre un couple de lacet de direction d'un dispositif de direction (5), un couple de lacet de roulis d'une régulation de roulis (6) et un couple de lacet d'entraînement d'une régulation d'entraînement (7),
**caractérisé en ce que**
la régulation de roulis (6) est conçue pour répartir le couple de lacet de roulis sur des couples de lacet de roulis individuels des différentes roues.

**6.** Dispositif selon la revendication 5, **caractérisé en ce que** les couples de lacet de roulis individuels ($M_{z,d1}$, $M_{z,d2}$, $M_{z,d3}$, $M_{z,d4}$) des différentes roues sont provoqués par un courant d'amortissement différent des différents amortisseurs des roues respectives.

FIG. 1

FIG. 2

FIG. 3

FIG. 4

EP 3 758 987 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014214272 A1
- DE 102007051226 A1
- US 8880293 B2
- WO 2005087521 A1
- US 20090132121 A1
- US 20080084110 A1
- EP 1197409 A2
- US 20050228565 A1
- US 20020128760 A1